# EUROPÄISCHE PATENTANMELDUNG

(11) **EP 2 332 777 A1**
(43) Veröffentlichungstag der Anmeldung: **15.06.2011**
(21) Anmeldenummer: 10194260.5
(22) Anmeldetag: 09.12.2010
(51) Int. Cl.: B60R 1/00

(54) **Automobil mit IR-Kamera**

(30) Priorität: 14.12.2009 AT 19682009
(71) Anmelder: Giroszasz, Monika, 8530 Deutschlandsberg (AT)
(72) Erfinder: Giroszasz, Monika, 8530 Deutschlandsberg (AT)
(74) Vertreter: Wirnsberger, Gernot

(57) **Zusammenfassung**

Die Erfindung betrifft ein Automobil (1) mit äußeren vorderen Scheinwerfern (2) und äußeren hinteren Scheinwerfern (3) und zumindest einer IR-Kamera (4) zur Aufnahme und Darstellung einer Umgebung des Automobils (1). Um in der Nacht insbesondere bei von einer Lenkerposition schwer einsehbaren Kreuzungen einen Überblick über eine Verkehrssituation zu erhalten, ist erfindungsgemäß vorgesehen, dass im Bereich der äußeren vorderen Scheinwerfer (2) und optional äußeren hinteren Scheinwerfer (3) beidseitig nach links bzw. rechts ausgerichtete IR-Kameras (4) angeordnet sind und im Automobilinneren (5) eine Anzeigevorrichtung angeordnet ist, auf der Bilder der IR-Kameras (4) darstellbar sind.

## Beschreibung

Die Erfindung betrifft ein Automobil mit äußeren vorderen Scheinwerfern und äußeren hinteren Scheinwerfern und zumindest einer IR-Kamera zur Aufnahme und Darstellung einer Umgebung des Automobils.

Ein Automobil dieser Art ist aus der DE 102 03 413 A1 bekannt. Ein derartiges Automobil umfasst eine am Dachhimmel eines Automobilinneren angebrachte Infrarot- bzw. IR-Kamera und eine Bildverarbeitungseinheit, die Bilder der IR-Kamera im Bereich der Frontscheibe des Automobils ausgibt. Die IR-Kamera wird insbesondere bei Dunkelheit oder Nebel eingesetzt, um eine größere Sicherheit zu erreichen.

Aus der EP 1 958 821 A2 ist es bekannt, an einer Stirnseite eines Automobils mittig eine IR-Kamera anzubringen, mit der in Fahrtrichtung auftretende Hindernisse erkennbar sind.

Aus der WO 01/29513 A1 ist ein Automobil mit einer variabel ausrichtbaren IR-Kamera bekannt, wobei bei einer Ausrichtung bzw. Verschwenkung der IR-Kamera ein vor dem Automobil liegender Straßenverlauf auch bei Kurven optimal erfassbar ist.

Aus der DE 39 32 216 C2 ist ein Automobil mit Scheinwerfern bekannt, die jeweils eine bedarfsweise mit einem Filter überdeckbare Fernlichtquelle aufweisen. Bei Bedarf kann der Filter über die Lichtquelle gestülpt werden, sodass lediglich ein infraroter Anteil des Emissionsspektrums der Lichtquelle den Scheinwerfer verlässt. Dieses emittierte Licht wird von einer im Automobilinneren positionierten IR-Kamera mit Anzeigeeinheit aufgenommen, sodass ein Automobillenker entfernt liegende Hindernisse frühzeitig erkennen kann, ohne dass entgegenkommende Verkehrsteilnehmer geblendet werden.

Bekannt ist es des Weiteren, beispielsweise aus der DE 43 36 288 C1, am Heck eines Automobils eine Videokamera anzuordnen, um ein Einparken des Automobils zu erleichtern.

Im Straßenverkehr kann es für Lenker von Automobilen in der Nacht insbesondere bei Kreuzungen zu unübersichtlichen Verkehrssituationen kommen, die Auslöser für Unfälle sind. Vor allem bei Personenkraftwagen mit einer langen Motorhaube besteht in dicht verbautem Gebiet das Problem, dass ein Lenker beispielsweise im Bereich einer rechtwinklig kreuzenden Straße einerseits nicht um ein im Kreuzungsbereich angeordnetes Haus blicken kann und andererseits das Automobil nicht in die Kreuzung hineinbewegen darf, lediglich um einen besseren Überblick über die Verkehrssituation zu erhalten.

Aufgabe der Erfindung ist es, ein Automobil der eingangs genannten Art zu schaffen, mit dem in der Nacht unübersichtliche Verkehrssituationen wie im Bereich von Kreuzungen rasch erfasst werden können.

Diese Aufgabe wird erfindungsgemäß gelöst, wenn bei einem Automobil der eingangs genannten Art im Bereich der äußeren vorderen Scheinwerfer und optional äußeren hinteren Scheinwerfer beidseitig nach links bzw. rechts ausgerichtete IR-Kameras angeordnet sind und im Automobilinneren eine Anzeigevorrichtung angeordnet ist, auf der Bilder der IR-Kameras darstellbar sind.

Ein mit der Erfindung erzielter Vorteil ist insbesondere darin zu sehen, dass in der Nacht bei unübersichtlichen Verkehrssituationen wie Kreuzungen mithilfe der IR-Kameras im Automobilinneren rasch ein Überblick über eine Verkehrssituation erhalten werden kann, ohne dass das Automobil oder dessen Lenker einer Gefahr ausgesetzt sind. Durch die Anordnung der IR-Kameras im Bereich der äußeren vorderen Scheinwerfer und optional äußeren hinteren Scheinwerfer sind quasi zusätzliche Augen vorhanden, welche eine Beurteilung der Verkehrssituation aufgrund der durch die Anzeigevorrichtung dargestellten Bilder der IR-Kameras erlaubt. Dabei sind die IR-Kameras zweckmäßigerweise nach links bzw. rechts ausgerichtet, damit von links bzw. rechts kommende Verkehrsteilnehmer bei gegebener Ausrichtung der IR-Kameras erfasst und verfolgt werden können.

Wenngleich es für diese Zwecke ausreichend ist, dass die IR-Kameras lediglich im Bereich der äußeren vorderen Scheinwerfer angeordnet sind, kann es insbesondere für die Zwecke einer Rückwärtsfahrt aus einer Parklücke auch vorgesehen sein, dass IR-Kameras im Bereich der äußeren hinteren Scheinwerfer angeordnet sind.

Bevorzugt ist vorgesehen, dass die IR-Kameras in den Scheinwerfern angeordnet sind. Dies erlaubt es, die Erfindung grundsätzlich ohne größere Änderungen eines bestehenden Automobils zu implementieren. Darüber hinaus sind die IR-Kameras in den Scheinwerfern nicht nur gegen Umwelteinflüsse geschützt, sondern besteht auch die erforderliche freie Sicht für die IR-Kameras. Schließlich sind die Scheinwerfer stirn- bzw. endseitig des Automobils angeordnet, sodass dieses lediglich minimal z. B. in eine Kreuzung eingefahren werden muss, um eine Verkehrssituation sichtbar zu machen und beurteilen zu können.

Bilder der IR-Kameras sind in der Regel nur bei Dunkelheit bzw. in der Nacht oder bei ungünstigen Wetterverhältnissen wie Nebel erforderlich. Diesbezüglich kann grundsätzlich vorgesehen sein, dass die Anzeigevorrichtung automatisch aktiviert wird, wenn Lampen der Scheinwerfer eingeschaltet werden. Da jedoch häufig auch während des Tages mit Licht gefahren wird, ist es zweckmäßig, dass die Anzeigevorrichtung durch einen Hauptschalter ein- und ausschaltbar ist. Dabei kann vorgesehen sein, dass die Anzeigevorrichtung bei eingeschaltetem Hauptschalter Bilder der IR-Kameras nur darstellt, wenn das Automobil eine vorgegebene Geschwindigkeit unterschreitet oder nicht erreicht hat. Die Anzeigevorrichtung stellt dann Bilder der IR-Kameras beispielsweise beim Zufahren auf eine Kreuzung dar, wenn z. B. eine Geschwindigkeit von 40 km/h unterschritten wird. Sobald das Automobil beispielsweise wieder eine Geschwindigkeit von 40 km/h erreicht hat und die Verkehrssituation bewältigt ist, ist eine weitere Darstellung der Bilder der IR-Kameras entbehrlich und werden diese nicht mehr dargestellt. In diesem Zusammenhang kann insbesondere auch vorgesehen sein, dass die Anzeigevorrichtung bei eingeschaltetem Hauptschalter Bilder der IR-Kameras während einer Betätigung eines Blinkhebels oder Blinkers darstellt. Dadurch ist sichergestellt, dass bei Abbiegevorgängen, bei welchen das Automobil in der Regel zumindest nahezu zum Stillstand kommt, eine Verkehrssituation im Kreuzungsbereich jedenfalls dargestellt wird.

Sofern ein Hauptschalter für die Anzeigevorrichtung vorgesehen ist, ist dieser bevorzugt an einem Lenkrad angeordnet, um rasch betätigt werden zu können.

Mit Vorteil sind in den äußeren vorderen Scheinwerfern und den äußeren hinteren Scheinwerfern IR-Kameras vorgesehen und ist im Automobilinneren zumindest ein

Schalter angeordnet, mit welchem alternativ eine Darstellung der Bilder der IR-Kameras der äußeren vorderen Scheinwerfer oder der äußeren hinteren Scheinwerfer auf der Anzeigevorrichtung auswählbar ist. Grundsätzlich ist es zwar möglich, die Anzeigevorrichtung in vier Bereiche gleicher Größe aufzuteilen, in welchen die Bilder von zwei IR-Kameras der äußeren vorderen Scheinwerfer und zwei Bilder der äußeren hinteren Scheinwerfer dargestellt werden bzw. dargestellt sind. Da sich das Automobil jedoch lediglich in eine Richtung bewegen kann, also vorwärts oder rückwärts, ist es zweckmäßig, entsprechende Schalter vorzusehen, weil dann die Anzeigevorrichtung bzw. ein Bildschirm in effizienter Weise in zwei größengleiche Hälften für die Darstellung der Bilder der IR-Kameras geteilt werden kann. Ein Bild einer links angeordneten IR-Kamera wird dann entsprechend auf der linken Seite des Bildschirms angezeigt, ein Bild einer rechten IR-Kamera auf der rechten Seite des Bildschirms.

Zweckmäßig ist es, um möglichst gute Sichtverhältnisse zu haben, dass die IR-Kameras ein Sichtfeld mit einem Winkel von zumindest 30°, vorzugsweise zumindest 45°, überstreichen. Diese bevorzugten Winkel ergeben sich daraus, dass beispielsweise bei einer Kreuzung sowohl von links als auch von rechts kommende Verkehrsteilnehmer möglichst gut erfasst werden sollen.

Von Vorteil ist es des Weiteren, wenn die IR-Kameras schwenkbar gelagert sind. Eine Grundeinstellung der IR-Kameras ist in der Regel so, beispielsweise wenn diese im Bereich von äußeren vorderen Scheinwerfern eingebaut sind, dass die linke IR-Kamera einen Winkel, in Bezug auf eine Stirnseite des Automobils, von 0° bis zumindest 45° überstreicht. Eine IR-Kamera, die einem rechten äußeren Scheinwerfer angeordnet ist, überstreicht hingegen, wiederum bezogen auf eine Stirnseite des Automobils, einen Winkelbereich von etwa 20° bis zumindest 65°. Dadurch können bei geltender Rechtsfahrregel sowohl von links als auch von rechts kommende Verkehrsteilnehmer optimal erfasst werden; bei Linksfahrregel sind die Verhältnisse entsprechend umgekehrt. Dennoch kann es auch zu Verkehrssituationen kommen, in welchen sich Straßen nicht in einem Winkel von 90° kreuzen, sondern beispielsweise in einem Winkel von weniger als 90°. In diesem Fall kann es angezeigt sein, dass die IR-Kameras schwenkbar gelagert sind, um einen Blickwinkel der IR-Kameras an eine aktuelle Verkehrssituation anzupassen. Diesbezüglich kann insbesondere im Automobilinneren zumindest ein Bedienelement vorgesehen sein, mit dem zumindest ein Teil der IR-Kameras individuell oder gemeinsam schwenkbar ist, sodass eine Vielzahl verschiedener Verkehrssituationen erfasst werden kann.

Grundsätzlich kann die Anzeigevorrichtung so angeordnet sein, dass die Bilder der IR-Kameras für einen Beifahrer einsehbar sind, der an den Lenker des Automobils entsprechende Informationen weitergibt. Bevorzugt ist es jedoch, insbesondere für Situationen ohne Beifahrer, dass die Anzeigevorrichtung so angeordnet ist, dass die Bilder der IR-Kameras für einen Lenker des Automobils einsehbar sind. Hierfür kann die Anzeigevorrichtung beispielsweise an einer Windschutzscheibe bzw. Frontscheibe des Automobils befestigt sein.

Einer einfachen Integration in bestehende Technologien wegen ist es zweckmäßig, wenn die Anzeigevorrichtung ein Bildschirm einer Bedienkonsole und/oder eines Navigationssystems ist. Bei heute gängigen Navigationssystemen ist es möglich, alternativ verschiedene Informationen auf einem Bildschirm darzustellen, beispielsweise verfügbare Radiosender, eine Straßenkarte und/oder Informationen über den Betriebszustand des Automobils. In ähnlicher Weise kann auch vorgesehen sein, dass alternativ Bilder der IR-Kameras auf einem Bildschirm einer Bedienkonsole bzw. eines Navigationssystems dargestellt werden können.

Weitere Merkmale, Vorteile und Wirkungen der Erfindung ergeben sich aus dem nachfolgend dargestellten Ausführungsbeispiel der Erfindung. In den Zeichnungen, auf welche dabei Bezug genommen wird, zeigen:
Fig. 1 eine perspektivische Darstellung eines Automobils;
Fig. 2 eine teilweise seitliche Ansicht eines Automobils;
Fig. 3 einen Ausschnitt eines Inneren eines Automobils;
Fig. 4 eine Verkehrssituation im Bereich einer Kreuzung;
Fig. 5 ein zwischen zwei größeren Fahrzeugen eingeparktes Automobil;
Fig. 6 das in Fig. 5 dargestellte Automobil während eines Ausparkens.

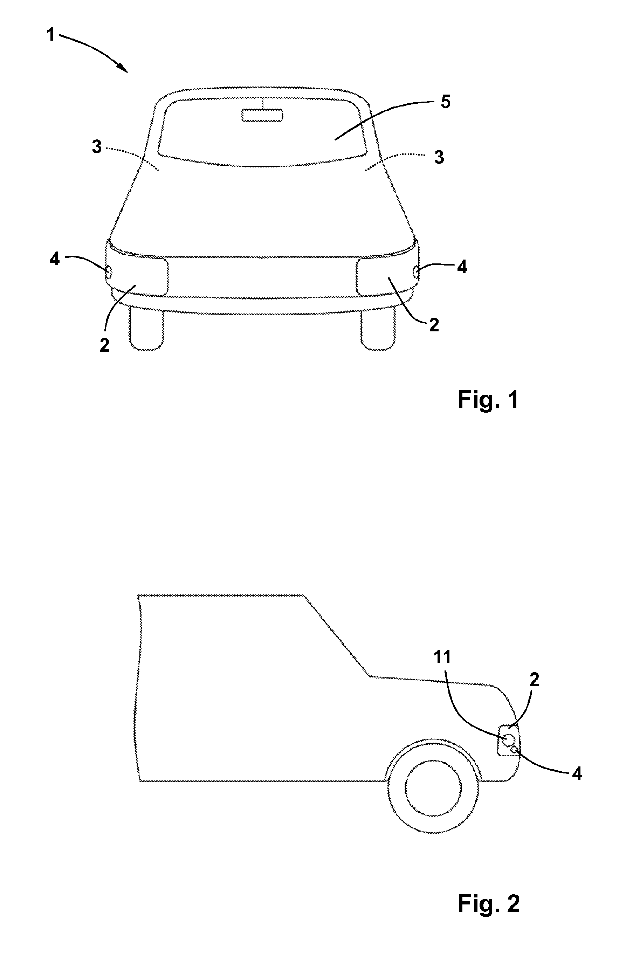

In Fig. 1 ist ein erfindungsgemäßes Automobil 1 dargestellt. Das Automobil 1 weist in bekannter Weise stirnseitig jeweils an einer äußeren Seite zwei vordere Scheinwerfer 2 auf. Die äußeren vorderen Scheinwerfer 2 umfassen ebenfalls in bekannter Weise Lampen, die insbesondere bei Dunkelheit eingeschaltet sind. Des Weiteren umfassen die äußeren vorderen Scheinwerfer 2, wie beispielsweise in Fig. 2 ersichtlich, Blinker 11. Neben den Lampen und den Blinkern 11 sind in den äußeren vorderen Scheinwerfern 2 zusätzlich IR-Kameras 4 angeordnet, die nach links bzw. rechts ausgerichtet sind, sodass mit einem Sichtfeld bzw. Blickwinkel von etwa 45° oder mehr von links bzw. rechts kommende Verkehrsteilnehmer erfasst werden können.

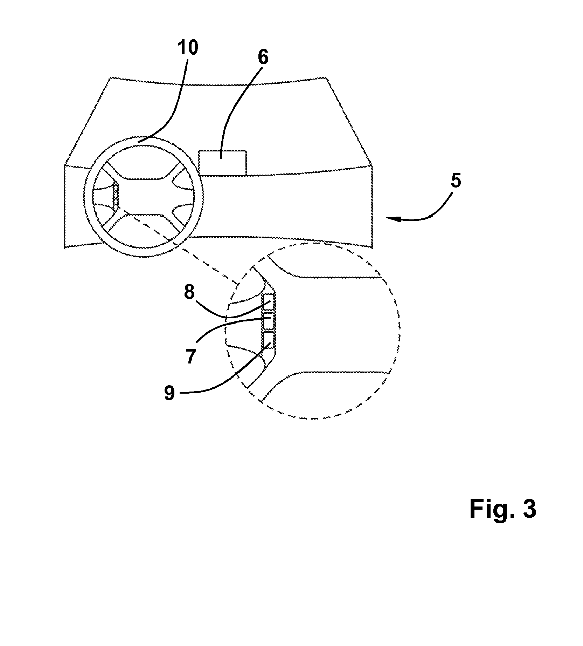

In Fig. 3 ist ein Automobilinneres 5 ersichtlich. Im Automobilinneren 5 ist eine Anzeigevorrichtung 6 angeordnet, die Bilder der IR-Kameras 4 darstellt. Grundsätzlich ist ein Bildschirm der Anzeigevorrichtung 6 zweigeteilt, sodass entweder Bilder der IR-Kameras 4 im Bereich der äußeren vorderen Scheinwerfer 2 oder äußeren hinteren Scheinwerfer 3 angezeigt werden. An einem Lenkrad 10 ist ein Hauptschalter 7 angeordnet, der mit Hand bzw. einem Finger betätigt werden kann. Ist der Hauptschalter 7 betätigt, so ist die Anzeigevorrichtung 6 grundsätzlich aktiv. Dies bedeutet, dass Bilder der IR-Kameras 4, die in den äußeren vorderen Scheinwerfern 2 und den äußeren hinteren Scheinwerfern 3 eingebaut sind, auf der Anzeigevorrichtung 6 dargestellt werden. Dabei wird in der linken Hälfte des Bildschirms der Anzeigevorrichtung 6 das bzw. die Bilder einer linken IR-Kamera 4 dargestellt, wohingegen in der rechten Hälfte des Bildschirms die Bilder der korrespondierenden rechten IR-Kamera 4 dargestellt werden. Durch zwei weitere Schalter 8, 9 lässt sich auswählen, ob die Bilder der IR-Kameras 4 im Bereich der äußeren vorderen Scheinwerfer 2 oder der äußeren hinteren Scheinwerfer 3 dargestellt werden. Die Anzeigevorrichtung 6 muss nicht, wie dargestellt, im Bereich einer Windschutzscheibe angeordnet sein, sondern kann beispielsweise auch integraler Bestandteil eines Navigationssystems mit einem Bildschirm sein. Es kann auch vorgesehen sein, dass die Anzeigevorrichtung 6 bei eingeschaltetem Hauptschalter 7 automatisch in einen Stand-by-Modus schaltet, solange eine vorgegebene Geschwindigkeit des Automobils 1 überschritten ist. Bei Unterschreiten der vorgegebenen Geschwindigkeit wird dann die Anzeigevorrichtung 6 wieder automatisch aktiviert.

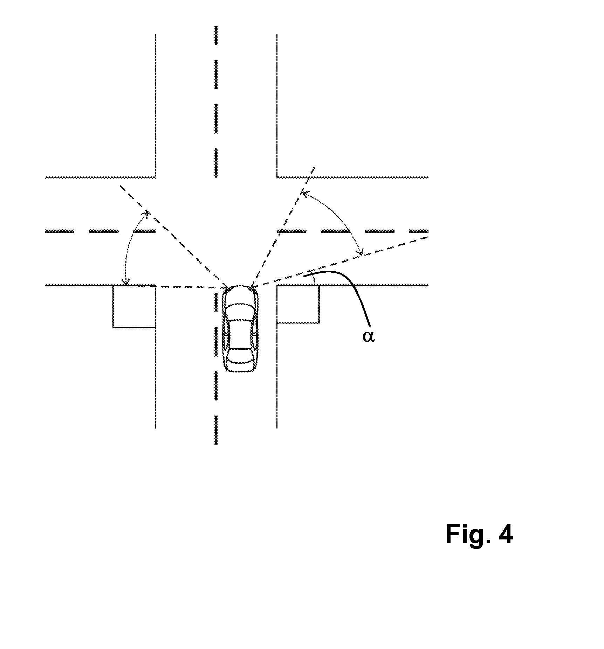

In Fig. 4 ist eine typische Verkehrssituation dargestellt, anhand welcher die Vorzüge eines erfindungsgemäßen Automobils 1 verdeutlicht werden können. Das Automobil 1 befindet sich auf einer Straße in Geradeausfahrt und trifft auf eine Kreuzung mit einer Straße im rechten Winkel. Die Verkehrssituation ist jedoch aufgrund einer starken Bebauung unübersichtlich, sodass ein Lenker des Automobils 1 ohne Hilfsmittel eine Verkehrssituation nicht einsehen bzw. erkennen kann, auch wenn das Automobil 1 mit seiner Stirnseite bereits geringfügig in die Kreuzung ragt. Aufgrund der im Bereich der äußeren vorderen Scheinwerfer 2 vorgesehenen IR-Kameras 4 können jedoch auf der Anzeigevorrichtung 6 in der Nacht sowohl von links als auch von rechts kommende Verkehrsteilnehmer erkannt werden. Entsprechend der in Fig. 4 dargestellten Situation sind die IR-Kameras 4 so ausgerichtet, dass eine linke IR-Kamera 4, in Bezug auf eine gerade Stirnseite des Automobils 1, nach links einen Winkel von etwa 0° bis 45° überstreicht, wohingegen eine rechte IR-Kamera 4 einen Winkelbereich, wiederum bezogen auf eine Stirnseite des Automobils 1, von etwa 20° bis 65° überstreicht. Die unterschiedlichen Winkelbereiche in Bezug auf die Stirnseite des Automobils 1 ergeben sich daraus, dass sich das Automobil 1 auf einer rechten Fahrspur der Fahrbahn befindet. Sofern ein Linksverkehr gegeben wäre, wären die Verhältnisse umgekehrt. Durch die vorgesehenen IR-Kameras 4 und die Anzeige deren Bilder im Automobilinneren 5 kann der Lenker des Automobils 1 insbesondere in der Nacht oder auch bei schlechten Sichtverhältnissen, beispielsweise bei starkem Nebel, eine Verkehrssituation ohne Weiteres einschätzen, auch wenn das Automobil 1 sich zumindest weitgehend außerhalb des Kreuzungsbereichs befindet.

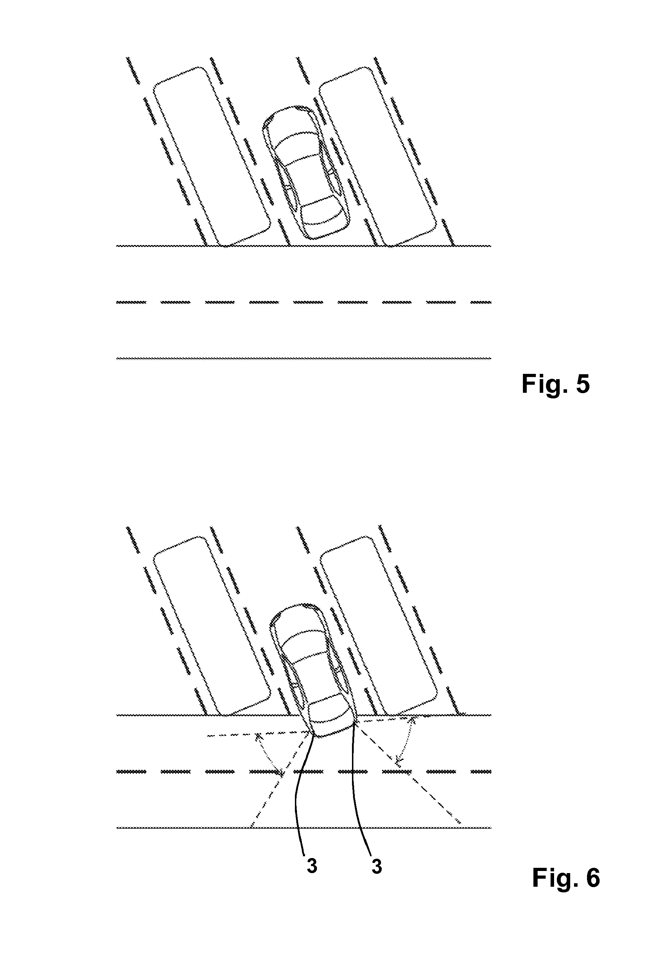

In Fig. 5 und 6 ist eine ähnlich unübersichtliche Verkehrssituation für den Lenker des Automobils 1 dargestellt, wobei sich das Automobil 1 in einer Parksituation zwischen zwei längeren Fahrzeugen befindet, beispielsweise Bussen. In dieser Situation ist ein Ausparken grundsätzlich gefährlich, da weder von rechts noch von links kommende Verkehrsteilnehmer vom Lenker des Automobils 1 gesehen werden können. Mit den in den äußeren hinteren Scheinwerfern 3 angeordneten IR-Kameras 4 ist es jedoch möglich, auch ohne Blickkontakt weitere Verkehrsteilnehmer zu erkennen, sodass auf einfache Weise sicher ausgeparkt werden kann.

## Patentansprüche

1. Automobil (1) mit äußeren vorderen Scheinwerfern (2) und äußeren hinteren Scheinwerfern (3) und zumindest einer IR-Kamera (4) zur Aufnahme und Darstellung einer Umgebung des Automobils (1), **dadurch gekennzeichnet, dass** im Bereich der äußeren vorderen Scheinwerfer (2) und optional äußeren hinteren Scheinwerfer (3) beidseitig nach links bzw. rechts ausgerichtete IR-Kameras (4) angeordnet sind und im Automobilinneren (5) eine Anzeigevorrichtung (6) angeordnet ist, auf der Bilder der IR-Kameras (4) darstellbar sind.

2. Automobil (1) nach Anspruch 1, **dadurch gekennzeichnet, dass** die IR-Kameras (4) in den Scheinwerfern (2, 3) angeordnet sind.

3. Automobil (1) nach Anspruch 1 oder 2, **dadurch gekennzeichnet, dass** die Anzeigevorrichtung (6) durch einen Hauptschalter (7) ein- und ausschaltbar ist.

4. Automobil (1) nach Anspruch 3, **dadurch gekennzeichnet, dass** die Anzeigevorrichtung (6) bei eingeschaltetem Hauptschalter (7) Bilder der IR-Kameras (4) nur darstellt, wenn das Automobil (1) eine vorgegebene Geschwindigkeit unterschreitet oder noch nicht erreicht hat.

5. Automobil (1) nach Anspruch 4, **dadurch gekennzeichnet, dass** die Anzeigevorrichtung (6) bei eingeschaltetem Hauptschalter (7) Bilder der IR-Kameras (4) während einer Betätigung eines Blinkhebels oder Blinkers (11) darstellt.

6. Automobil (1) nach einem der Ansprüche 3 bis 5, **dadurch gekennzeichnet, dass** der Hauptschalter (7) an einem Lenkrad (10) angeordnet ist.

7. Automobil (1) nach einem der Ansprüche 1 bis 6, **dadurch gekennzeichnet, dass** in den äußeren vorderen Scheinwerfern (2) und den äußeren hinteren Scheinwerfern (3) IR-Kameras (4) vorgesehen sind und im Automobilinneren (5) zumindest ein Schalter (8, 9) angeordnet ist, mit welchem alternativ eine Darstellung der Bilder der IR-Kameras (4) der äußeren vorderen Schweinwerfer (2) oder der äußeren hinteren Scheinwerfer (3) auf der Anzeigevorrichtung (6) auswählbar ist.

8. Automobil (1) nach einem der Ansprüche 1 bis 7, **dadurch gekennzeichnet, dass** die IR-Kameras (4) ein Sichtfeld mit einem Winkel von zumindest 30°, vorzugsweise zumindest 45°, überstreichen.

9. Automobil (1) nach einem der Ansprüche 1 bis 8, **dadurch gekennzeichnet, dass** die IR-Kameras (4) schwenkbar gelagert sind.

10. Automobil (1) nach Anspruch 9, **dadurch gekennzeichnet, dass** im Automobilinneren (5) zumindest ein Bedienelement vorgesehen ist, mit dem zumindest ein Teil der IR-Kameras (4) individuell oder gemeinsam schwenkbar ist.

11. Automobil (1) nach einem der Ansprüche 1 bis 10, **dadurch gekennzeichnet, dass** die Anzeigevorrichtung (6) so angeordnet ist, dass die Bilder der IR-Kameras (4) für einen Lenker des Automobils (1) einsehbar sind.

12. Automobil (1) nach einem der Ansprüche 1 bis 11, **dadurch gekennzeichnet, dass** die Anzeigevorrichtung (6) ein Bildschirm einer Bedienkonsole und/oder eines Navigationssystems ist.
